# FASCICULE DE BREVET EUROPEEN

(11) **EP 0 557 400 B1**
(45) Date de publication et mention de la délivrance du brevet: **30.10.1996**
(21) Numéro de dépôt: 91920726.6
(22) Date de dépôt: 13.11.1991
(51) Int. Cl.: G01N 35/02, G01N 21/13, G01N 33/48

(54) **ANALYSEUR AUTOMATIQUE D'ECHANTILLONS PAR COLORIMETRIE**
AUTOMATISCHES GERÄT ZUR KOLORIMETRISCHEN ANALYSE VON PROBEN
AUTOMATIC COLORIMETRIC SAMPLE ANALYZER

(30) Priorité: 16.11.1990 FR 9014681
(43) Date de publication de la demande: 01.09.1993
(73) Titulaire: SOCIETE ALCYON ANALYZER S.A., F-34270 SAINT MATHIEU DE TREVIERS (FR)
(72) Inventeur: COVAIN, Serge, F-34980 Saint-Gely-du-Fesc (FR)
(74) Mandataire: Ravina, Bernard
(86) Numéro de dépôt international: FR9100898
(87) Numéro de publication internationale: WO9208986

(56) Documents cités:
- EP-A- 0 289 789
- EP-A- 0 316 766
- DE-A- 3 500 639
- DE-A- 3 840 719
- US-A- 4 580 895
- US-A- 4 738 534
- US-A- 4 844 868
- PATENT ABSTRACTS OF JAPAN vol. 1, no. 114 (E) 30 septembre 1977 ; & JP-A-52 045 382

## Description

La présente invention a pour objet un analyseur automatique d'échantillons par colorimétrie. On connaît déjà des analyseurs automatiques d'échantillons sanguins. Les analyseurs connus comprennent trois plateaux dont le premier est agencé pour recevoir des éprouvettes contenant des échantillons sanguins, le second des cuvettes de réactifs et le troisième des cuves réactionnelles dans chacune desquelles est opéré le mélange dosé d'une quantité d'échantillons sanguins avec une quantité de réactifs.

Les doses d'échantillons et de réactifs sont prélevées à l'aide d'une seringue montée sur un bras asservi, mobile au-dessus des différents plateaux. De plus, tous les plateaux ou certains d'entre eux, sont mobiles à rotation et entraînés par un ou des moyens moteurs.

L'appareil est en outre pourvu d'un moyen d'analyse destiné à coopérer avec chacune des cuves réactionnelles afin d'établir une mesure. Tous les moyens d'analyse comprennent une source de lumière par exemple une lampe halogène qui par l'intermédiaire de lentilles, de fibres optiques et d'au moins un filtre interférentiel, dirige un rayon lumineux au travers de la cuve réactionnelle. Ce rayon lumineux, après avoir traversé la cuve, est reçu par un photo-détecteur. Pour chaque mélange, échantillon et réactif, il faut établir plusieurs mesures avec des rayons lumineux de différentes longueurs d'ondes.

On connaît un moyen d'analyse dont la lampe, les lentilles et le photo-détecteur sont installés fixement sur le bâti de l'appareil. Selon cette configuration, le plateau des cuves réactionnelles est entraîné à rotation pour amener chacune d'entre elles en regard du moyen d'analyse. Toujours selon cette configuration, les filtres interférentiels sont montés sur une même monture tournante entraînée à rotation par un moteur pas à pas de façon que les filtres interférentiels soient amenés tour à tour à intercepter le rayon lumineux émis par la lampe. Cette disposition, quoique couramment utilisée, présente un certain nombre d'inconvénients. En effet, les filtres interférentiels sont des organes fragiles et leur entraînement en rotation peut nuire à une prise de mesure correcte.

En tout état de cause, la mise au point d'un tel moyen d'analyse est délicate justement en raison de cet entraînement en rotation. De plus, la rotation des filtres interférentiels est génératrice de vibrations. Comme les filtres sont disposés à proximité de la lampe, les vibrations générées risquent de détériorer le filament de cette lampe.
Pour cette raison, les lampes utilisées sont d'un type spécial résistant particulièrement bien aux vibrations. La mesure colorimétrique pour chaque longueur d'onde utilisée suppose que soit établie une référence.
Pour cette raison, une partie du faisceau lumineux avant d'avoir traversé la cuve réactionnelle et après avoir traversé le filtre interférentiel, est dévié vers un second photo-détecteur.

De façon que les photo-détecteurs, pour un rayon lumineux de longueur d'ondes déterminée, donnent tous deux des réponses équivalentes, il est nécessaire de leur adjoindre des circuits correcteurs. Cependant, la correction établie pour une longueur d'onde déterminée n'est plus valable pour une autre longueur d'onde si bien qu'il est nécessaire d'adjoindre d'autres circuits correcteurs. On voit donc que la mise au point d'un tel appareil est particulièrement délicate.

L'état de la technique est aussi illustré par les documents EP-A-316.766, EP-A-289.789, DE-A-38 40719 et US-A-4.738.534.
Le document EP-A-316.766 est relatif à un procédé et dispositif d'analyse automatique d'échantillons comprenant notamment un plateau motorisé portant plusieurs cuves réactionnelles amenées tour à tour en relation optique avec un dispositif d'analyse fixe.
Le document EP-A-289.789 est relatif à un appareil automatique d'analyses. Cet appareil comporte un système photométrique fixe, pourvu d'un élément à fente, au travers duquel passe le rayon lumineux après avoir traversé la cuve @réactionnelle. Le rayon lumineux, en sortie du dispositif à fente, est diffracté et vient frapper un élément photosensible.
Le document DE-A-38 40719 est relatif à un appareil automatique d'analyse prévu avec source unique de lumière blanche. La lumière blanche provenant de cette source est dirigée vers un diaphragme à fente et en sortie de ce diaphragme sur une grille de diffraction afin d'être décomposée en rayon lumineux de différentes longueurs d'ondes. Ces rayons lumineux par l'intermédiaire de fibres optiques sont dirigés vers les cuves réactionnelles.
Le document US-A-4.738.534 montre un spectrophotomètre à rayon vertical dont les filtres sont montés sur une monture mobilisée par un moteur pas à pas.

La présente invention a pour objet de pallier les inconvénients cités en mettant en oeuvre un nouveau type d'analyseur pour lequel ont été résolus les problèmes inhérents à la prise de référence et les problèmes inhérents aux vibrations générées par une monture tournante.

A cet effet, l'analyseur automatique d'échantillons par colorimétrie, comporte un premier support sur lequel sont disposées des éprouvettes contenant les échantillons à analyser, par exemple des échantillons sanguins, un deuxième support sur lequel sont disposées des cuves de réactif et un troisième support, sur lequel sont disposées des cuves réactionnelles, dans chacune desquelles est opéré le mélange dosé d'une quantité d'échantillon avec une quantité de réactif, les dites quantités étant prélevées dans les éprouvettes d'échantillons et dans les cuves de réactifs par au moins une seringue montée sur un bras motorisé, et introduites après prélèvement dans lesdites cuves réactionnelles. De plus le support des cuves réactionnelles est mobilisé par un moteur pour amener successivement lesdites cuves en relation optique avec un moyen fixe d'analyse colorimétrique comportant une source lumineuse, au moins un filtre interférentiel interceptant le trajet du rayon lumineux émis par la source lumineuse et au moins un photo-détecteur. L'analyseur tel que défini se caractérise essentiellement en ce que le moyen d'analyse se développe de part et d'autre du trajet des cuves réactionnelles et comprend au moins un module d'analyse constitué :
- par la terminaison d'une fibre optique en relation optique avec la source lumineuse, ladite terminaison étant située d'un côté du trajet des cuves réactionnelles,
- et par un filtre interférentiel et un photo-détecteur en relation optique l'un avec l'autre et avec la terminaison, lesdits filtre et photo-détecteur étant disposés de l'autre côté du trajet des cuves réactionnelles et sur le trajet du rayon lumineux émis par la terminaison de la fibre optique, chaque cuve réactionnelle étant destinée à être traversée, pour une première mesure, par ledit rayon lumineux et étant constituée en une matière transparente à ce rayon lumineux, chaque cuve réactionnelle étant séparée de la cuve contiguë par un intervalle libre de tout obstacle au trajet du rayon lumineux entre la terminaison de la fibre optique et le filtre interférentiel, pour une deuxième mesure ou mesure de référence.
On comprend immédiatement tout l'intérêt d'une telle invention. En effet, le filtre interférentiel étant fixe ainsi que tous les éléments du moyen d'analyse, la mise au point de ce moyen en sera facilitée. En outre, pour chaque module, un seul photo-détecteur assure la mesure de la référence et la mesure colorimétrique, ce qui conduit à une simplification notable des circuits électriques associés à ce genre d'éléments.

Selon une autre caractéristique de l'invention, le moyen de mesure comporte plusieurs modules contigus destinés à être traversés successivement par chaque cuve réactionnelle et chaque module est équipé d'un filtre interférentiel distinct de ceux équipant les autres modules. On voit donc que grâce à cette disposition, les filtres interférentiels sont fixes.

D'autres avantages et caractéristiques de l'invention apparaîtront à la lecture de la description d'une forme préférée de réalisation en se référant aux dessins annexés en lesquels :

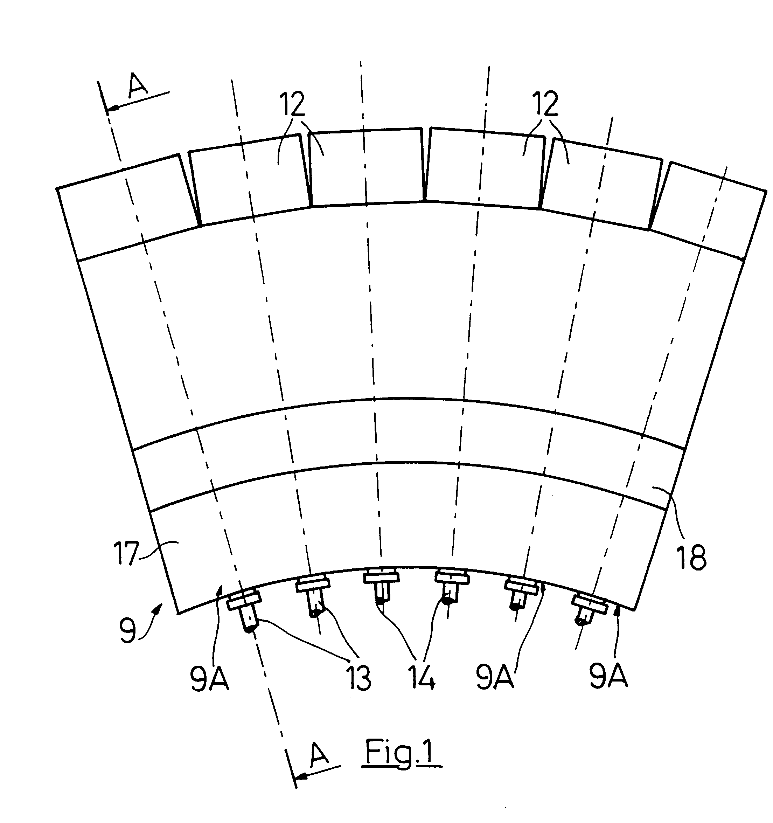

- la figure 1 est une vue de dessus d'un moyen de mesure selon l'invention,

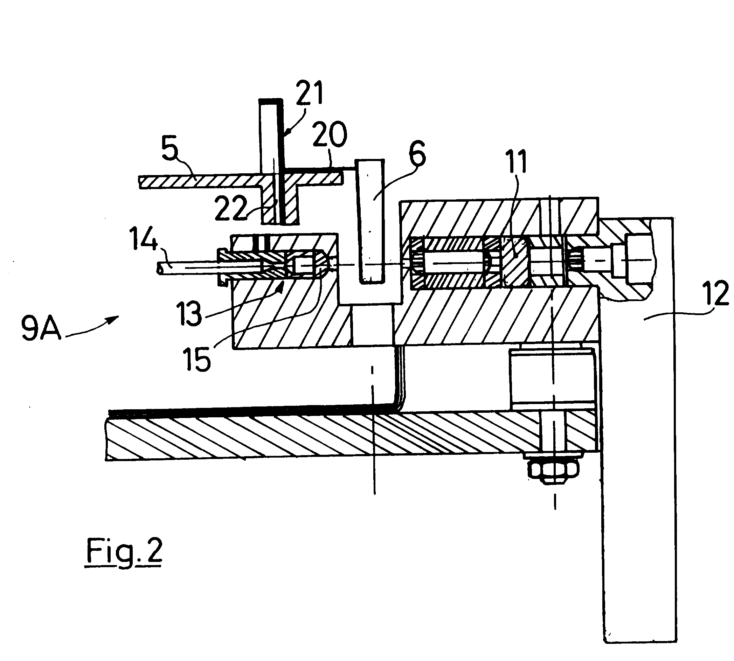

- la figure 2 est une section selon la ligne AA de la figure 1,

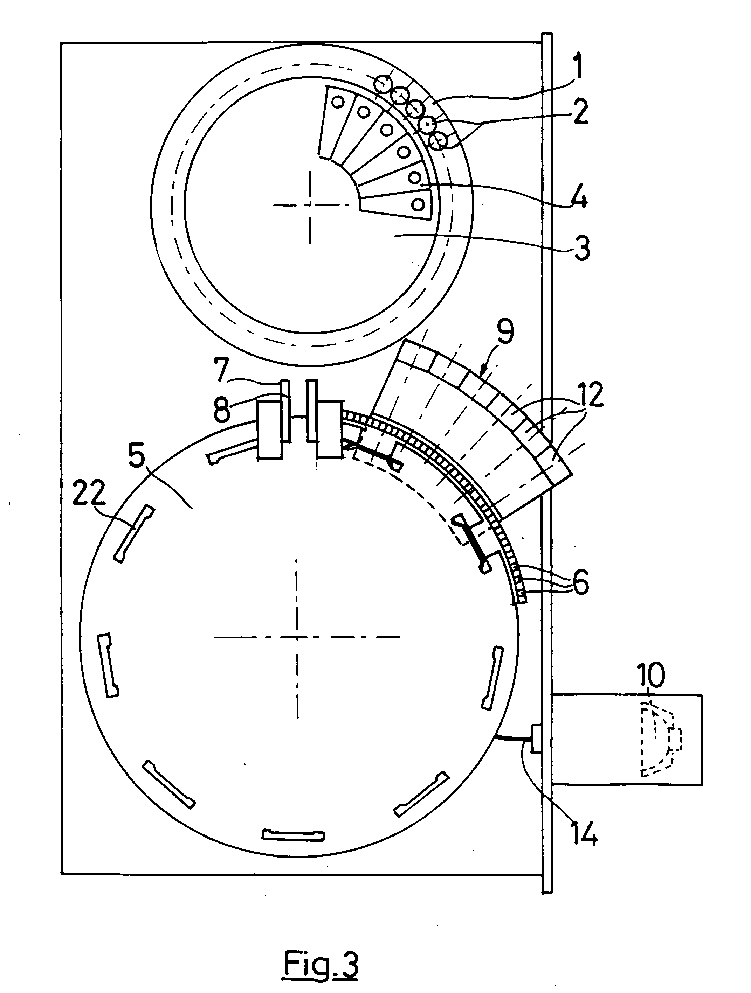

- la figure 3 est une vue de dessus d'un appareil équipé d'un tel moyen de mesure,

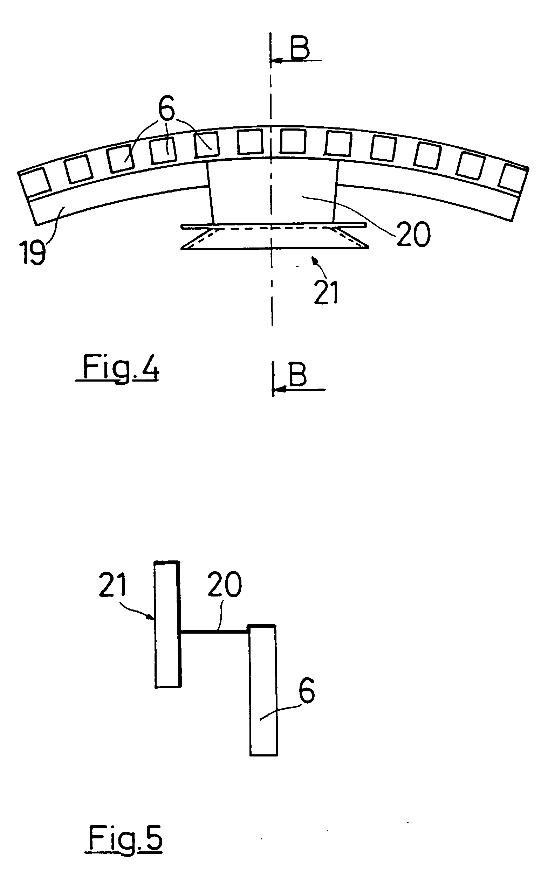

- la figure 4 est une vue de dessus d'un secteur réactionnel composé de plusieurs cuves réactionnelles.
- la figure 5 est une vue en coupe selon la ligne BB de la figure 4.

Tel que représenté, l'analyseur automatique d'échantillons par colorimétrie comprend un bâti sur lequel est disposé un premier support 1 sur lequel sont placées des éprouvettes 2 contenant des échantillons à analyser, ces échantillons pouvant être du sang ou tout autre matériau biologique.
Sur le bâti sont également disposés un deuxième support 3 recevant des cuves 4 de réactif et un troisième support 5 recevant des cuves réactionnelles 6 dans chacune desquelles est opéré le mélange dosé d'une quantité d'échantillons avec une quantité de réactif, les dites quantités étant prélevées dans les éprouvettes d'échantillons 2 et dans les cuves de réactifs par au moins une seringue 7 montée sur un bras 8 motorisé et introduite après prélèvement dans les cuves réactionnelles.
Avec successivement chacune de ces cuves coopère un moyen d'analyse colorimétrique 9 qui comporte une source lumineuse 10, au moins un filtre interférentiel 11 interceptant le trajet du rayon lumineux émis par la source lumineuse et au moins un photodétecteur 12 associé optiquement au filtre interférentiel et recevant de ce filtre un rayon lumineux.

A titre d'exemple, on a représenté un analyseur dont les supports 1 et 2 sont constitués par des plateaux montés à rotation dans des paliers du bâti et entraînés en rotation à l'aide de moyens moteurs.

Toujours, à titre d'exemple, les deux plateaux 1 et 2 sont montés concentriquement l'un dans l'autre et peuvent être liés l'un à l'autre pour n'en former qu'un ou bien être indépendants l'un de l'autre en ce qui concerne leur entraînement en rotation.

Toujours, à titre d'exemple, l'analyseur sera pourvu de deux seringues 7 montées chacune sur un bras mobile, une de ces seringues étant affectée au prélèvement de l'échantillon, l'autre au prélèvement du réactif.

Conformément à l'invention, le moyen d'analyse 9 est fixe tandis que le support 5 des cuves réactionnelles 6 est mobile et coopère avec un moyen moteur commandé de façon à amener chacune des cuves réactionnelles tour à tour en relation optique avec le moyen d'analyse 9, lequel se développe de part et d'autre du trajet des cuves réactionnelles 6 et comprend au moins un module 9A d'analyse constitué :
- par la terminaison 13 d'une fibre optique 14 en relation optique avec la source lumineuse 10, la dite terminaison 13 étant située d'un côté du trajet des cuves réactionnelles 6,
- et par un filtre interférentiel 11 et un photodétecteur 12 en relation optique l'un avec l'autre et avec la terminaison 13, les dits filtre et photodétecteur étant disposés de l'autre côté du trajet des cuves réactionnelles 6 et sur le trajet du rayon lumineux émis par la terminaison 13 de la fibre optique 14, chaque cuve 6 étant destinée à être traversée par le dit rayon lumineux et étant constituée en une matière transparente à ce rayon lumineux.

Selon la forme préférée de réalisation, la source lumineuse 10 est constituée par une lampe halogène disposée dans une boite à lumière dans laquelle débouche la fibre optique 14, la dite source lumineuse étant disposée à distance du module 9A si bien que ce dernier ne pourra être soumis à la chaleur dégagée par la lampe.

De préférence, à la terminaison 13 du module 9A pourra être associé une lentille 15.
Deux lentilles 15 du même type pourront être associées au filtre interférentiel et placées en écartement l'une de l'autre en amont du dit filtre en considérant le sens du trajet du rayon lumineux.
Le photodétecteur 12 est placé en aval du filtre 11 toujours en considérant le sens du trajet du rayon lumineux.

Toujours selon la forme préférée de réalisation, le moyen d'analyse comporte plusieurs modules 9A contigus destinés à être traversés successivement par chaque cuve réactionnelle 6 et chaque module est équipé d'un filtre interférentiel distinct de ceux équipant les autres modules.

On conçoit donc que cette disposition conduisant à installer fixement les filtres interférentiels permet de faciliter la mise au point du moyen d'analyse.

A titre d'exemple purement indicatif, il est prévu six modules 9A et donc chaque cuve réactionnelle subit six analyses suivant des longueurs d'ondes différentes.

Selon un aspect particulièrement avantageux de l'invention, chaque cuve réactionnelle 6 est séparée de la cuve contigue par un intervalle libre de tout obstacle au trajet du rayon lumineux entre la terminaison de la fibre optique et le filtre interférentiel et l'analyseur par l'intermédiaire du photodétecteur procède lorsque la cuve intercepte le rayon lumineux, à une première mesure colorimétrique et lorsque l'intervalle entre cette cuve et la cuve contigue est traversé par le rayon lumineux à une seconde mesure qui donne une mesure de référence.
On voit donc que grâce à cette disposition, il n'est plus besoin d'associer au photodétecteur 12 un second photodétecteur pour la mesure de la valeur de la référence.

Selon la forme préférée de réalisation, les cuves réactionnelles 6 sont mobiles suivant un plan horizontal et le trajet du rayon lumineux entre la terminaison de la fibre optique et le filtre interférentiel du module est horizontal mais selon une variante, le trajet du rayon lumineux entre la terminaison 13 de la fibre optique et le filtre interférentiel est vertical.

Toujours selon la forme préférée de réalisation, les modules d'analyse 9A sont montés dans un bloc 17 commun en métal par exemple, comportant un canal horizontal de passage des cuves réactionnelles, les dits modules se développant chacun de part et d'autre du canal suivant une direction générale horizontale perpendiculaire au dit canal et donc au trajet des cuves réactionnelles.
La section droite duu canal épouse de préférence le contour d'un "U".
De plus, perpendiculairement aux faces verticales du canal, le bloc est équipé de perçages axialement alignés deux à deux, les perçages axialement alignés recevant les éléments d'un même module 9A.

Toujours selon la forme préférée de réalisation, le trajet des cuves réactionnelles au travers des modules d'analyse s'effectue suivant un arc de circonférence de cercle mais il est bien évident que ce trajet pourra être rectiligne.

Il faut noter que le canal 15 dans lequel la cuve effectue un trajet suivant un arc de circonférence est courbé suivant un arc de circonférence de cercle ayant comme centre celui de l'arc de circonférence décrit par le trajet de chaque cuve réactionnelle.
Suivant cette configuration, les modules se dévelopent chacun suivant un rayon et l'écart angulaire entre chaque module est constant.

Toujours selon la forme préférée de réalisation, chaque cuve présente une section droite carrée ou rectangulaire et est positionnée sur le support mobile 5 en sorte que deux de ses faces verticales opposées viennent se disposer au niveau de chaque module, perpendiculairement au trajet du rayon lumineux entre la terminaison de la fibre optique et le filtre interférentiel, ce trajet comme on le comprend s'effectuant dans le canal perpendiculairement à la direction générale de ce dernier.

Préférentiellement, le support 5 des cuves réactionnelles est constitué par un plateau circulaire aménagé pour recevoir de manière amovible les cuves réactionnelles.
Ce plateau circulaire s'étend dans un plan horizontal et est monté à rotation suivant un axe vertical.
A cet effet, au plateau circulaire est fixé un arbre vertical s'étendant vers le bas à partir de ce plateau.
Cet arbre vertical est monté dans un palier à bille et coopère en entraînement avec un organe moteur par l'intermédiaire d'une transmission.
Le moteur est commandé pas à pas de façon à positionner chacune des cuves tour à tour dans l'axe des modules 9A.
Il faut noter que après chaque positionnement dans l'axe d'un module d'analyse, un temps d'arrêt est marqué de façon que la mesure puisse s'effectuer correctement.

Il est avantageux pour un tel analyseur que les cuves soient groupées par secteur circulaire de façon à être introduites ou retirées par secteur du plateau circulaire 5.
Ainsi, après analyse du contenu des cuves d'un secteur, le dit secteur pourra être retiré du plateau circulaire pour libérer la place à un nouveau secteur.

Selon la forme préférée de réalisation, les cuves d'un même secteur sont toujours écartées les unes des autres de façon qu'un intervalle régulier subsiste entre deux cuves contigues et sont liées à une barette 19 courbée suivant un arc de circonférence, la dite barrette étant horizontale et se développant du côté concave du secteur.
De plus, la zone centrale de la barrette est prolongée vers le centre de l'arc de circonférence qu'épouse le secteur par une paroi horizontale 20 solidaire d'un organe 21 de positionnement dans un orifice 22 du plateau circulaire.
Un tel secteur est notamment décrit dans la demande de brevet déposée ce même jour par la demanderesse pour "un segment réactionnel et un analyseur équipé d'un tel segment.

Enfin, il faut noter que les cuves réactionnelles de chaque secteur s'étendent verticalement à la périphérie du plateau circulaire et que la paroi 20 de chaque secteur vient en appui contre la face supérieure du plateau.

Toujours suivant cette disposition, le plateau 5 est disposé suivant un niveau supérieur par raport au bloc 17. En outre, l'arc de circonférence suivant lequel se développe le canal 18 du bloc 19 et le plateau circulaire 5 sont coaxiaux.
Il faut noter qu'à l'analyseur tel que décrit pourra être adjoint un dispositif de chargement de secteurs sur le plateau et un dispositif de déchargement de secteurs usagés.
De tels dispositifs sont notamment décrits dans la demande de brevet déposée ce même jour par la demanderesse pour "un segment réactionnel et un analyseur équipé d'un tel segment.

Enfin, il est précisé que l'analyse colorimétrique est effectuée par application de la loi de Lambert selon laquelle la valeur recherchée est égale au logarithme décimal du rapport entre la valeur de la référence et la valeur de la mesure.

Il va de soi que la présente invention peut recevoir tous aménagements et toutes variantes sans pour autant sortir du cadre du présent brevet.

## Revendications

1. Analyseur automatique d'échantillons par colorimétrie, comportant un premier support (1) sur lequel sont disposées des éprouvettes (2) contenant les échantillons à analyser, par exemple des échantillons sanguins, un deuxième support (3) sur lequel sont disposées des cuves de réactif (4) et un troisième support (5), sur lequel sont disposées des cuves réactionnelles (6), dans chacune desquelles est opéré le mélange dosé d'une quantité d'échantillon avec une quantité de réactif, les dites quantités étant prélevées dans les éprouvettes (2) d'échantillons et dans les cuves (4) de réactifs par au moins une seringue (7) montée sur un bras motorisé, et introduites après prélèvement dans lesdites cuves réactionnelles (6), le support (5) des dites cuves (6) étant mobilisé par un moteur pour amener successivement lesdites cuves (6) en relation optique avec un moyen fixe (9) d'analyse colorimétrique comportant une source lumineuse (10), au moins un filtre interférentiel (11) interceptant le trajet du rayon lumineux émis par la source lumineuse et au moins un photo-détecteur (12), caractérisé en ce que le moyen d'analyse (9) se développe de part et d'autre du trajet des cuves réactionnelles (6) et comprend au moins un module (9A) d'analyse constitué :
- par la terminaison (13) d'une fibre optique (14) en relation optique avec la source lumineuse (10), ladite terminaison (13) étant située d'un côté du trajet des cuves réactionnelles (6),
- et par un filtre interférentiel (11) et un photo-détecteur (12) en relation optique l'un avec l'autre et avec la terminaison (13), lesdits filtre (11) et photo-détecteur (12) étant disposés de l'autre côté du trajet des cuves réactionnelles (6) et sur le trajet du rayon lumineux émis par la terminaison (13) de la fibre optiqu (14), chaque cuve (6) étant destinée à être traversée, pour une première mesure, par ledit rayon lumineux et étant constituée en une matière transparente à ce rayon lumineux, chaque cuve réactionnelle (6) est séparée de la cuve contiguë par un intervalle libre de tout obstacle au trajet du rayon lumineux entre la terminaison (13) de la fibre optique (14) et le filtre interférentiel (11), pour une deuxième mesure ou mesure de référence.

2. Analyseur selon la revendication 1, caractérisé en ce que le moyen d'analyse comporte plusieurs modules (9A) contigus destinés à être traversés successivement par chaque cuve réactionnelle (6) et que chaque module est équipé d'un filtre interférentiel (11) distinct de ceux équipant les autres modules (9A).

3. Analyseur selon la revendication 1, caractérisé en ce que la source lumineuse (10) est placée à distance du ou des modules (9A).

4. Analyseur selon la revendication 1, caractérisé en ce que les cuves réactionnelles (6) sont mobiles suivant un plan horizontal et que le trajet du rayon lumineux, entre la terminaison (13) de la fibre optique (14) et le filtre interférentiel (11) du module (9A), est horizontal.

5. Analyseur selon la revendication 1, caractérisé en ce que les cuves réactionnelles (6) sont mobiles suivant un mouvement horizontal et que le trajet du rayon lumineux, entre la terminaison (13) de la fibre optique (14) et le filtre interférentiel (11), est vertical.

6. Analyseur selon les revendications 1 et 2, caractérisé en ce que le trajet des cuves réactionnelles (6) au travers des modules d'analyse (9A) s'effectue suivant un arc de circonférence de cercle.

7. Analyseur selon les revendications 1 et 5, caractérisé en ce que chaque cuve réactionnelle (6) présente une section droite carrée ou rectangulaire et est positionnée sur le support mobile (5) deux de ses faces verticales opposées venant se disposer, au niveau de chaque module (9A), perpendiculairement au trajet du rayon lumineux entre la terminaison (13) et le filtre (11).

8. Analyseur selon les revendications 1 et 2, caractérisé en ce que les modules (9A) sont disposés dans un même bloc (17) comportant un canal (18) de passage des cuves réactionnelles (6) et des perçages, axialement alignés deux à deux, débouchant dans le canal perpendiculairement aux faces verticales de ce dernier, chaque paire de perçages axialement alignés, recevant les éléments d'un module (9A).

9. Analyseur selon les revendications 1, 7 et 8, caractérisé en ce que les cuves réactionnelles (6) sont groupées par secteur circulaire, que les cuves (6) d'un même secteur sont écartées les unes des autres selon un intervalle régulier qui subsiste entre deux cuves (6) contiguë (6) que les dites cuves (6) sont liées à une barrette (19) courbées suivant un arc de circonférence, ladite barrette (19) étant horizontale et se développant du côté concave du secteur, que la zone centrale de cette barrette (19) est prolongée par une paroi horizontale (20) solidaire d'un organe de positionnement (21) dans un orifice (22) du support (5), que ce support (5) est un plateau circulaire entraîné en rotation par un organe moteur, que les cuves réactionnelles (6) de chaque secteur viennent se disposer verticalement à la périphérie du plateau circulaire (5) et que la paroi (20) du secteur vient prendre appui contre la face supérieure du plateau (5).

## Patentansprüche

1. Automatischer Analysator für Proben durch Kolorimetrie mit einem ersten Träger (1), auf dem Reagenzgläser (2) mit zu analysierenden Proben, z.B. Blutproben angeordnet sind, einem zweiten Träger (3), auf dem Reagenzwannen (4) angeordnet sind, sowie einem dritten Träger (5), auf dem Reaktionsbehälter (6) angeordnet sind, in denen jeweils die dosierte Mischung einer Probenmenge mit einer Reagenzmenge wirkt, wobei die Mengen mittels wenigstens einer an einem motorisierten Arm angebrachten Spritze (7) aus den Probenreagenzgläsern (2) und den Reagenzwannen (4) entnommen und nach der Entnahme in die Reaktionsbehälter (6) eingebracht werden, wobei der Träger (5) für die Wannen (6) durch einen Motor derart in Bewegung gesetzt wird, daß die Wannen (6) nacheinander in optische Beziehung mit einem festen Kolorimetrieanalysemittel (9) gebracht werden, das eine Lichtquelle (10), wenigstens ein Interferenzfilter (11), das die Bahn des von der Lichtquelle emittierten Lichtstrahls abfängt, sowie wenigstens einen Photodetektor (12) aufweist, dadurch gekennzeichnet, daß sich das Analysemittel (9) beiderseits der Bahn der Reaktionsbehälter (6) erstreckt und wenigstens ein Analysemodul (9A) aufweist, das aus folgendem besteht:
- dem Abschluß (13) einer Lichtleitfaser (14) in optischer Beziehung mit der Lichtquelle (10), wobei der Abschluß (13) an einer Seite der Bahn der Reaktionsbehälter (6) liegt,
- sowie einem Interferenzfilter (11) und einem Photodetektor (12) in optischer Beziehung miteinander und mit dem Abschluß (13), wobei das Filter (11) und der Photodetektor (12) an der anderen Seite der Bahn der Reaktionsbehälter (6) und an der Bahn des von dem Abschluß (13) der Lichtleitfaser (14) emittierten Lichtstrahls angeordnet sind, wobei jeder Behälter (6) für eine erste Messung von dem Lichtstrahl durchquert werden soll und aus einem für diesen Lichtstrahl transparenten Material besteht, wobei jeder Reaktionsbehälter (6) von dem angrenzenden Behälter durch ein Intervall getrennt ist, das für eine zweite Messung oder Bezugsmessung von jedem Hindernis für die Bahn des Lichtstrahls zwischen dem Abschluß (13) der Lichtleitfaser (14) und dem Interferenzfilter (11) frei ist.

2. Analysator nach Anspruch 1, dadurch gekennzeichnet, daß das Analysemittel mehrere angrenzende Module (9A) aufweist, die nacheinander von jedem Reaktionsbehälter (6) durchquert werden sollen, und daß jedes Modul mit einem Interferenzfilter (11) ausgestattet ist, der sich von denjenigen unterscheidet, mit denen die anderen Module (9A) ausgestattet sind.

3. Analysator nach Anspruch 1, dadurch gekennzeichnet, daß die Lichtquelle (10) im Abstand von dem oder den Modulen (9A) angeordnet ist.

4. Analysator nach Anspruch 1, dadurch gekennzeichnet, daß die Reaktionsbehälter (6) nach einer horizontalen Ebene beweglich sind und die Bahn des Lichtstrahls zwischen dem Abschluß (13) der Lichtleitfaser (14) und dem Interferenzfilter (11) des Moduls (9A) horizontal liegt.

5. Analysator nach Anspruch 1, dadurch gekennzeichnet, daß die Reaktionsbehälter (6) nach einer horizontalen Bewegung beweglich sind und die Bahn des Lichtstrahls zwischen dem Abschluß (13) der Lichtleitfaser (14) und dem Interferenzfilter (11) vertikal liegt.

6. Analysator nach den Ansprüchen 1 und 2, dadurch gekennzeichnet, daß die Bahn der Reaktionsbehälter (6) durch die Analysemodule (9A) nach einem Umfangskreisbogen durchlaufen wird.

7. Analysator nach den Ansprüchen 1 und 5, dadurch gekennzeichnet, daß jeder Reaktionsbehälter (6) einen quadratischen oder rechteckigen Querschnitt aufweist und auf dem beweglichen Träger (5) positioniert ist, wobei zwei der entgegengesetzten vertikalen Seiten auf Höhe jedes Moduls (9A) senkrecht zu der Bahn des Lichtstrahls zwischen dem Abschluß (13) und dem Filter (11) in Anordnung gelangen.

8. Analysator nach den Ansprüchen 1 und 2, dadurch gekennzeichnet, daß die Module (9A) in ein und demselben Block (17) angeordnet sind, der einen Durchgangskanal (18) für die Reaktionsbehälter (6) sowie Bohrungen aufweist, die paarweise axial ausgerichtet sind und in den Kanal senkrecht zu dessen vertikalen Seiten münden, wobei jedes Paar von axial ausgerichteten Bohrungen die Elemente eines Moduls (9A) aufnimmt.

9. Analysator nach den Ansprüchen 1, 7 und 8, dadurch gekennzeichnet, daß die Reaktionsbehälter (6) nach Kreissektoren angeordnet sind, daß die Behälter (6) ein und desselben Sektors voneinander nach einem regelmäßigen Intervall im Abstand angeordnet sind, das zwischen zwei angrenzenden Behältern (6) vorliegt, daß die Behälter (6) mit einer gekrümmten Leiste (19) entlang eines Umfangsbogens verbunden sind, wobei die Leiste (19) horizontal liegt und an der konkaven Seite des Sektors verläuft, daß die zentrale Zone dieser Leiste (19) durch eine horizontale Wand (20) verlängert ist, die mit einem Positionierungsorgan (21) in einer Öffnung (22) des Trägers (5) fest verbunden ist, daß dieser Träger (5) eine kreisförmige Scheibe ist, die durch ein Motororgan in Drehung angetrieben wird, daß die Reaktionsbehälter (6) jedes Sektors in vertikale Anordnung am Umfang der kreisförmigen Scheibe (5) gelangen, und daß die Wand (20) des Sektors gegen die Oberseite der Scheibe (5) in Anlage gelangt.

## Claims

1. An automatic sample analyser using colorimetry, comprising a first support (1) on which are arranged test tubes (2) containing the samples to be analysed, for example blood samples, a second support (3) on which are arranged vessels of reagent (4) and a third support (5), on which are arranged reactor vessels (6), in each of which the proportioned mixing of a quantity of sample with a quantity of reagent is carried out, said quantities being taken from the test tubes (2) of samples and the vessels (4) of reagents by at least one syringe (7) mounted on a motorised arm, and introduced, after being collected, into said reactor vessels (6), the support (5) for said vessel (6) being mobilised by a motor so as to bring said vessels (6) successively into optical relation with a fixed colorimetric analysis means (9) comprising a light source (10), at least one interference filter (11) intercepting the path of the ray of light emitted by the light source and at least one photodetector (12), characterised in that the analysis means (9) extends on either side of the path of the reactor vessels (6) and comprises at least one analysis module (9A) constituted:
- by the termination (13) of an optical fibre (14) in optical relation with the light source (10), said termination (13) being located onone side of the path of the reactor vessels (6),
- and by an interference filter (11) and a photodetector (12) in optical relation with one another and with the termination (13), said filter (11) and said photodetector (12) being arranged on the other side of the path of the reactor vessels (6) and on the path of the ray of light emitted by the termination (13) of the optical fibre (14), each vessel (6) being intended to be passed through, for an initial measurement, by said ray of light and being made of a material transparent to that ray of light, each reactor vessel (6) is separated from the contiguous vessel by a gap free of all obstacles to the path of the ray of light between the termination (13) of the optical fibre (14) and the interference filter (11), for a second measurement or reference measurement.

2. An analyser according to Claim 1, characterised in that the analysis means comprises several contiguous modules (9A) intended to be passed through in succession by each reactor vessel (6) and in that each module is equipped with an interference filter (11) distinct from those with which the other modules (9A) are equipped.

3. An analyser according to Claim 1, characterised in that the light source (10) is placed some distance away from the module or modules (9A).

4. An analyser according to Claim 1, characterised in that the reactor vessels (6) are movable in a horizontal plane and that the path of the ray of light, between the termination (13) of the optical fibre (14) and the interference filter (11) of the module (9A), is horizontal.

5. An analyser according to Claim 1, characterised in that the reactor vessels (6) are movable in a horizontal movement and in that the path of the ray of light, between the termination (13) of the optical fibre (14) and the interference filter (11), is vertical.

6. An analyser according to Claims 1 and 2, characterised in that the path of the reactor vessels (6) through the analysis modules (9A) takes place along an arc of circumference of a circle.

7. An analyser according to Claims 1 and 5, characterised in that each reactor vessel (6) has a square or rectangular cross section and is positioned on the movable support (5) two of its opposite vertical faces being arranged, level with each module (9A), perpendicular to the path of the ray of light between the termination (13) and the filter (11).

8. An analyser according to Claims 1 and 2, characterised in that the modules (9A) are arranged in the same block (17) comprising a channel (18) through which the reactor vessels (6) can pass and holes, aligned axially in twos, opening out into the channel perpendicular to the vertical faces of the latter, each pair of axially aligned holes receiving the elements of one module (9A).

9. An analyser according to Claims 1, 7 and 8, characterised in that the reactor vessels (6) are grouped by circular sector, in that the vessels (6) of any one sector are separated from one another by a regular interval that exists between two contiguous vessels (6), in that said vessels (6) are connected to a bar (19) curved over an arc of circumference, said bar (19) being horizontal and extending on the concave side of the sector, in that the central area of this bar (19) is extended by a horizontal wall (20) integral with a positioning member (21) in an orifice (22) of the support (5), in that this support (5) is a circular plate driven in rotation by a motor unit, in that the reactor vessels (6) of each sector are arranged vertically at the periphery of the circular plate (5) and in that the wall (20) of the sector bears against the upper face of the plate (5).
